# EUROPEAN PATENT APPLICATION

(11) **EP 4 667 264 A1**
(43) Date of publication of application: **24.12.2025**
(21) Application number: 24183747.5
(22) Date of filing: 21.06.2024
(51) Int. Cl.: B60K 28/02, B60K 28/10, B60W 60/00, B60W 50/02

(54) **METHODS AND CONTROL UNITS FOR AN AUTONOMOUS VEHICLE, AUTONOMOUS VEHICLES AND COMPUTER PROGRAMS**

(71) Applicant: VOLKSWAGEN AG, 38440 Wolfsburg (DE)
(72) Inventor: Montero Bayo, Luca, 10249 Berlin (DE)

(57) **Abstract**

The invention refers methods and control units for an autonomous vehicle (10, 12). Further, the invention pertains to autonomous vehicles (10, 12) and computer programs.

It is provided that an autonomous vehicle, AV (10, 12), monitors its Autonomous Driving System, ADS, and its Autonomous Vehicle Platform, AVP to detect internal faults (22) and/or an emergency events of a passenger to trigger a minimal risk maneuver, MRM, (24) in response. The MRM (24) transfers the AV (10, 12) into a minimal risk condition, MRC (26). The surrounding traffic is warned by transmitting incident information about the triggered MRM (24) of the AV (10, 12) to its environment by using a communication module of the AV (10, 12).

## Description

The invention refers to methods and control units for an autonomous vehicle. Furthermore, the invention pertains to autonomous vehicles and computer programs.

Autonomous vehicles (AVs) have become an important focus of research and development in recent years. In this scope, the transition from human-operated to fully autonomous driving leads to a growing need for reliable strategies to ensure safe operation. Considering the absence of a human driver, AVs need to handle a plethora of situations that are unpredictable and, in many cases, require innovative solutions that have conventionally been handled by human drivers.

On the other side, Vehicle to Everything (V2X) communications are set to become one of the key pillars to increase safety and efficiency in road transportation. The existing connectivity standards have been instrumental in enabling vehicles to communicate with surrounding nodes, progressively enabling a set of use cases that are foreseen to assist the digital, highly-automated driver.

The reaction of AVs is generally motivated by functional safety in order to be handled without a human driver. For example, in a situation where the AVs detect a fault of one of its systems, the AVs stop as soon as possible in the nearest stop opportunity.

### State of the art

Document EP 3819888 A1 relates to a vehicle system of a vehicle configured to detect an event and to broadcast said event using a decentralized environmental notification message (DENM). The event may be an accident, a road-block an animal, a pedestrian, an obstacle or an ambulance vehicle.

Document US 20210064054 A1 suggests a path providing system for a vehicle that receives sensing information from sensors disposed at the vehicle and determines an optimal path to guide the vehicle.

Document CN 113965568 A pertains to an edge computing system for an urban road V2X network to be used for event discovery, traffic scene understanding and automatic driving decision making.

### Description of the invention

Due to the plethora of unpredictable situations AVs need to handle, there is a demand for safe operations with improved safety.

This problem is solved by the methods and the control units for an autonomous vehicle, the autonomous vehicles and the computer programs according to the independent claims. Further advantages and embodiments will become apparent from the dependent claims as well as the following description.

According to an aspect of the invention, a method for an autonomous vehicle (AV) is provided. An AV is a vehicle that is capable of operating with little or no human input. Autonomous vehicles, such as self-driving cars, are responsible for all driving activities including perceiving the environment, monitoring important systems, and controlling the vehicle, including navigating from origin to destination.

In general, an AV comprises an Autonomous Driving System (ADS) and an Autonomous Vehicle Platform (AVP). The ADS is a sub-system of the AV that comprises all the necessary hardware and software to function as a digital driver. The ADS hosts a sensor set such as cameras, LiDAR, radar, audio, ultrasound, position sensors, e.g. a Global Positioning System (GPS), and/or inertial measurement sensors. For example, deep neural networks may be used to analyze inputs from these sensors to detect and identify objects and their trajectories. The ADS further includes the necessary computing performance, i.e. at least one processor, e.g. for perceiving the environment, e.g. LiDAR, radar, and/or camera-based perception, and trajectory planning, and/or for controlling the AV, e.g. to take a maneuver. The ADS is configured to control the AV, e.g. the driving, braking and steering systems, including navigating from origin to destination. For example, the ADS provides commands to control the AV. The AVP is another sub-system of the AV that comprises the base vehicle, which includes most of the customary vehicle functionalities. For example, the AV provides the software and hardware necessary to execute the commands provided by the ADS. The AVP may also include additional or modified vehicle functions and interfaces specialized for autonomous driving. The AV allocates an Autonomy Function (AF), a vehicle function responsible of defining the inner workings of the interface between the digital driver, i.e. the ADS, and the vehicle platform, i.e. the AVP. The AV may be a ground vehicle. For example, the AV may be a light-duty vehicle equipped with Level 3-5 ADS.

According to an step, an incident of the ADS and/or the AVP of the AV is identified by monitoring the ADS and/or the AVP. An incident may be an abnormal behavior of a system of the vehicle, i.e. a way of working which was not intended, ranging from internal electronic faults, e.g. a loss of the driving, braking and/or steering system, software misbehavior, such as bugs and/or crashes, and/or other behavioral and/or environmental-related emergency situations, e.g. tire pressure loss, loss of visibility and so on. Alternatively or additionally, the incident may be related to an abnormal behavior with respect to a state of health of a passenger of the AV, e.g. of the (safety) driver of the AV, and/or a hazard associated with the passenger of the AV which may bring the passenger into a condition of abnormal behavior with respect to the state of health, such as an opened door during driving of the vehicle, for example. For example, the AVP and/or the AVP is monitored continuously during operation thereof. The AV comprises a monitoring system configured to identify an incident of the ADS and/or the AVP of the AV by monitoring the ADS and/or the AVP.

According to another step, an internal fault of the AV and/or an emergency event of a passenger of the vehicle based on the identified incident of the ADS and/or the AVP is detected. In other words, based on the identified incidents, it is determined whether a trip interruption maneuver of the AV is necessary to prevent risks and to increase the safety of the AV and/or the surrounding traffic. Internal faults, e.g. a safety-relevant internal faults, may be related to faults of one or more electronic systems of the AV, i.e. an electronic fault, such as software and/or hardware faults. For example, the internal faults may be related to driving security, e.g. faults of driving, braking and/or steering systems, and/or to assistance, such as brake assist, lane assist and/or adaptive cruise control systems. In other words, whenever a component such as the braking, steering and/or propulsion system detects an internal fault, this internal fault can render the system unusable. In an example, the AV may detect an internal fault that indicates that the propulsion system is faulty, i.e., not usable. This affects the AV capabilities to execute any type of maneuver leading to potential safety-critical situations. An emergency event of a passenger of the vehicle may be an event which is related to a health issue of the passenger, such as physical and/or mental health issues. Examples of a physical health issue may be an internal physical health issue of the passenger such as a heart stroke, shortness of breath, fainting and so on, and/or an externally exposed physical health issue, such as vomiting, suffering a seizure, e.g. an epileptic seizure, open wounds and so on. Examples of a mental health issue may be an anxiety disorder, a panic disorder, a personality disorder, e.g. impulse behavior (Borderline), a psychotic disorder and so on. The emergency event of the passenger of the vehicle may be detected by using an interior camera system of the AV configured to monitor the passenger compartment combined with image-processing. The monitoring of the passenger for the purpose of emergency event detection with respect to a health issue of the passenger is generally known, e.g. by analysis of camera images, via detection of Ultra-Wide-Band (UWB) response signals, by analysis of detected acoustic signals, temperatures and/or moistures associated with the passenger and so on. For the sake of brevity, a detailed description thereof is omitted.

According to another step, a minimal risk maneuver (MRM) is triggered to control the ADS to transfer the AV into a minimal risk condition (MRC). The MRM is a fallback function by the ADS to achieve the MRC of the AV. The MRC is a stable, stopped condition to which a user or an ADS may bring a vehicle in order to reduce the risk of a crash when a given trip cannot or should not be continued. The terms MRM and MRC may refer to the terms as defined in the standard ISO/FDIS 23793-1. Depending on the identified incident(s), different criticalities may be determined and therefore different MRMs may be necessary to execute. In other words, different criticalities may be determined based on the safety risk associated with the identified incident. For example, in the case of an identified incident with respect to the camera system of the vehicle, an identified incident may refer to a first criticality in which immediate action is required, e.g. a complete loss of the function of a camera or a heart stroke of the passenger, or to a second criticality in which action is required at some point (but not necessarily immediately), e.g. an error in calibration of a camera or a breathing or heart rate of the passenger being detected as significantly higher or lower than usual. In other words, the MRM to be triggered may be selected based on the identified incident(s), e.g. based on the detected internal fault of the AV and/or the emergency event of the passenger. For example, in case the AV loses its propulsion capabilities, the ADS of the AV may trigger a MRM to stop the AV as soon and/or as safe as possible in the nearest stop opportunity, e.g. on a road shoulder. A road shoulder is a part of the road installed at the edge of the road, outside the lane boundary, to enable an emergency vehicle to bypass traffic congestion or to provide a place for a vehicle that encounters a problem to get out of the active traffic. For example, in case the AV loses its steering capabilities, the ADS of the AV may trigger an MRM to stop the AV as soon and/or as safe as possible in the nearest stop opportunity, e.g. on the lane the vehicle is currently driving on. For example, in case the AV loses its braking capabilities, the ADS of the AV may trigger an MRM to stop the AV as soon and/or as safe as possible in the nearest stop opportunity, e.g. by using the motor brake. The ADS may include a set of different MRMs for a plurality of different internal faults and/or emergency events of the passenger of the vehicle.

According to another step, a first Vehicle to Everything (V2X) communication signal including status information of the AV and incident information about the triggered MRM is transmitted to the environment of the AV by using a V2X communication module of the AV. The status information may include position and/or motion information of the AV. In other words, the AV signals to its environment particular details of a trip interruption maneuver being executed, i.e. the MRM, triggered by the internal fault or emergency event of the passenger of the vehicle, and/or the remaining functioning capabilities thereof. To this end, the communication may refer to a local vehicle-to-vehicle communication. Accordingly, surrounding traffic, e.g. road users in the environment of the AV, is informed about the safety risk which may be caused by the AV triggering the MRM as well as corresponding details of the triggered MRM of the AV having the internal fault and/or the emergency event of the passenger. Accordingly, the awareness of the surrounding traffic regarding the safety risk caused by the AV triggering the MRM is enhanced and the surrounding traffic may act more cautiously, thus reducing the safety risk caused by the AV triggering the MRM. In addition, due to the information about the triggered MRM, the surrounding traffic may determine whether the MRM may pose a threat to any of the particular traffic users such that the traffic users of the surrounding traffic may react more cautiously in the area affected by the MRM. Thus, only the traffic users in a specified local area affected by the MRM may be disturbed by the AV performing the MRM.

According to an embodiment, the first V2X communication signal may include a cooperative awareness message (CAM) including the status information of the AV. A CAM generally includes general vehicle information, i.e. the status information, such as position, speed and acceleration of the AV. The AV may continuously transmit CAMs, e.g. at least once a second, to inform surrounding road users, e.g. within a radius of up to 500 meters, about themselves. The first V2X communication signal may further include a second message including the incident information about the triggered MRM. In other words, the second message may be transmitted as a standalone message. Using a standalone message for the incident information allows to further use well-established and standardized protocols, e.g. for CAMs, for transmitting status information of the AV, thereby reducing the communication effort. Alternatively, the first V2X communication signal may include an extended CAM including the status information of the AV and the incident information about the triggered MRM. Accordingly, standardized protocols, such as CAM, may be used for reduced communication effort but require further modification of the CAM to further include extended information, such as the incident information.

According to another embodiment, the first V2X communication signal may be transmitted via broadcast. Broadcasting is a method of transferring a communication signal to all recipients simultaneously, e.g. a message to all nodes in the network using a one-to-all association. Broadcasting is a simple and effective method for informing the surrounding road users.

According to another embodiment, the method may further comprise the step of determining surrounding vehicles affected by the triggered MRM by using the ADS and/or the V2X communication module of the AV. Surrounding vehicles may be detected by sensors of the ADS and/or by exchanging V2X communication signals including status information, e.g. CAMs, signals with each other. Based thereon, the AV may determined whether and which of the surrounding vehicles are affected by the triggered MRM. The V2X communication signal may be transmitted to affected surrounding vehicles via unicast or multicast. Since the surrounding road users affected by the MRM are warned about the triggered MRM, the traffic safety may be efficiently increased. Unicast delivers a message to a single specific node using a one-to-one association between a sender and destination and multicast delivers a message to a group of nodes that have (expressed) interest in receiving the message using a one-to-many-of-many or many-to-many-of-many association. For example, the first V2X communication signal may only be transmitted to affected surrounding vehicles. In this case, a disturbance of the remaining (and potentially unaffected) road users may be reduced.

According to another embodiment, the incident information about the triggered MRM may include at least one of an incident type, an incident identifier, the MRC, a MRM limitation, a criticality and/or the faulty capability. The incident type may indicate a vehicle fault, an ADS fault and/or an AVP fault. An example of the incident identifier may be a loss of perception. The MRC may include the target safe state, such as a definition of how the risk minimization state will be achieved, e.g. a stop opportunity, such as a stop in current lane or drive to a parking spot. The MRM limitation may refer to a safe state limitation, e.g. a time and/or distance, such as 40 seconds or 10 km. The criticality may include an indicator for a severity of the incident of the AV. The faulty capability may indicate the driving capabilities that present an incident, e.g. a loss of propulsion capability. By transmitting more detailed incident information, the surrounding road users may better be informed about the potential risk of the MRM. In addition, they may better evaluate whether they are potentially affected by the MRM such that the traffic safety may be increased even further.

According to another embodiment, the method may further comprise the step of identifying a region affected by the MRM, e.g. by using the ADS, wherein the first V2X communication signal further includes a warning of the identified affected region as being potentially hazardous. The region may be, for example, a (planned) trajectory, a road, a lane or a section thereof. Accordingly, the surrounding road users are even better informed about areas of potential risks caused by the MRM. Furthermore, data width may be reduced since the surrounding road users do not require plenty of information about the MRM to identify the region affected by the MRM by themselves.

According to another embodiment, the method may further comprise the step of identifying a region affected by the MRM and transmitting a second V2X communication signal including the warning of the identified affected region by using the V2X communication module of the AV. In other words, the warning of the identified affected region may be transmitted as another V2X communication signal. Advantageously, the AV may transmit the first V2X communication signal including the status information and the incident information regardless of the warning of the identified affect region. In other words, the first V2X communication signal may be transmitted earlier as it has not to be waited until the affected region is identified by the AV such that an earlier awareness of the traffic users may be achieved, thereby increasing traffic safety.

According to another embodiment, the second V2X communication signal may include a Decentralized Environmental Notification Message (DENM). The DENM is a message about location and traffic data as well as traffic situations and hazards that is exchanged between road users. The DENM contains information about both the sending vehicle and the hazard area to warn others. The second V2X communication signal may further include a third message including the warning of the identified affected region. In other words, the third message may be transmitted as a standalone message. Using a standalone message for the warning of the identified affected region allows to further use well-established and standardized protocols, e.g. for DENMs, thereby reducing the communication effort. Alternatively, the V2X communication signal may include an extended DENM including the warning of the identified affected region. Accordingly, standardized protocols, such as DENM, may be used for reduced communication effort but require further modification to further include extended information, such as the warning of the identified affected region.

According to another aspect of the invention, a control unit for an autonomous vehicle is provided. The control unit is configured to perform the above-mentioned method. The autonomous vehicle may be the above-mentioned AV. The features and the advantages of the above-mentioned method can be applied analogously to the control unit.

According to another aspect of the invention, an autonomous vehicle including the above-mentioned control unit is provided. The features and the advantages of the above-mentioned control unit can be applied analogously to the autonomous vehicle.

According to another aspect of the invention, a second method for an AV is provided. The AV of the second method corresponds to an AV in the environment of the AV according to the above-mentioned (first) method. The features and the advantages of the first method can be applied analogously to the second method. For example, when the AV of the first method transmits a communication signal, the AV of the second method may receive the transmitted communication signal.

According to an step of the second method, a V2X communication signal including status information of another AV, e.g. the AV according to the first method, and incident information about a triggered MRM of the other AV is received by using a V2X communication module of the AV (of the second method). In other words, the AV (of the second method) becomes aware of the triggered MRM of the other vehicle (according to the first method) and the potential traffic safety risk inflicted therewith.

According to another step of the second method, a relevance of the triggered MRM of the other AV with regard to the AV is identified. In other words, the AV according to the second method evaluates whether it is potentially affected by the MRM and whether it requires to perform a countermeasure to avoid danger, e.g. a risk of collision with the other AV.

According to another step of the second method, the ADS of the AV (of the second method) is controlled based on the identified relevance of the triggered MRM of the other AV (according to the first method). In other words, the AV (of the second method) performs a countermeasure to avoid a collision with the other AV (of the first method) when the identified relevance exceeds a predetermined threshold. For example, a countermeasure may be to drive slower and/or to avoid passing the affected area of the MRM, e.g. by adapting the navigation route and/or by changing lanes.

According to another aspect of the invention, a second control unit for an autonomous vehicle is provided. The second control unit is configured to perform the second method. The autonomous vehicle may be the AV of the second method. The features and the advantages of the second method can be applied analogously to the second control unit.

According to another aspect of the invention, a second autonomous vehicle including the second control unit is provided. The features and the advantages of the second control unit can be applied analogously to the second autonomous vehicle.

Each of the above-mentioned control units may be implemented by electrical or electronic parts or components (hardware) or by firmware (ASIC). Additionally or alternatively, the functionality of the control units may be realized when executing a suitable program (software). Also, the control units may be realized by a combination of hardware, firmware and/or software. For example, individual components of the control units for providing individual functionalities may be designed as a separate integrated circuits or may be arranged on a common integrated circuits.

The individual components of the control units may be designed as one or more processes running on one or more processors in one or more electronic computing devices and generated during execution of one or more computer programs. The computing devices may be configured to cooperate with other components to implement the functionalities described herein. The instructions of the computer programs may be stored in a memory, such as a RAM element. However, the computer programs may also be stored in a non-volatile storage medium, such as a CD-ROM, flash memory or the like.

It is further apparent to the skilled person that the functionalities of a plurality of computing units (data processing devices) may be combined or combined in a single device, or that the functionality of a particular data processing device may be distributed among a plurality of devices to implement the functionality of the control unit.

A further aspect relates to a computer program comprising instructions which, when the program is executed by a computer, such as a control unit for an autonomous vehicle, cause the computer to perform any of the methods according to the invention, in particular a method for an autonomous vehicle.

Further preferred embodiments of the invention result from the additional features mentioned in the dependent claims.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings, wherein:
- Figure 1: schematically shows a flow chart of methods for autonomous vehicles according to the present invention; and
- Figure 2: schematically shows a driving situation of two autonomous vehicles according to the present invention.

In the following, recurring and similar features in this and in the subsequent representations are provided with the same reference numerals and a repetitive description thereof is omitted.

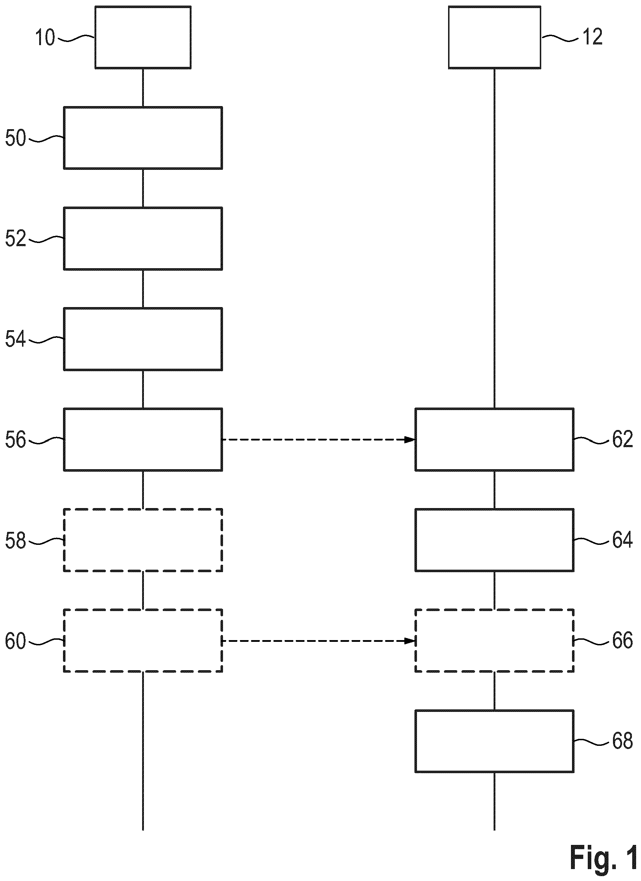

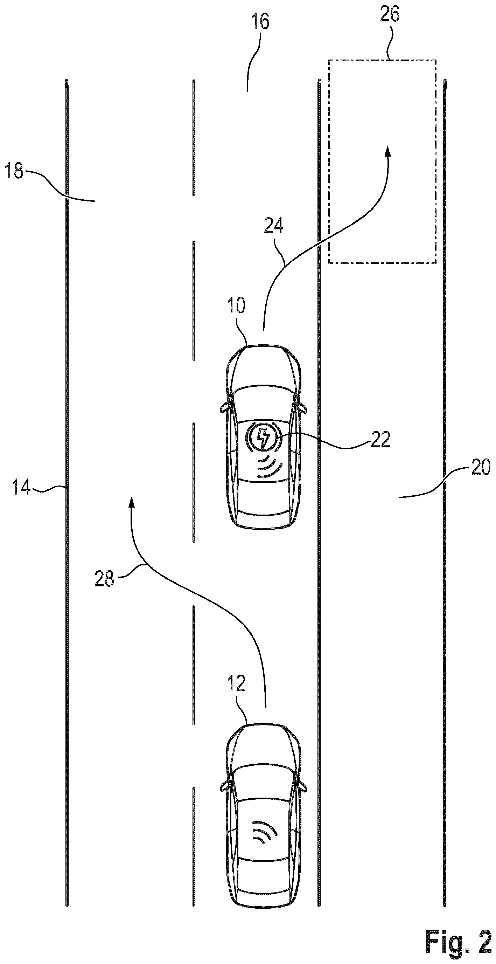

Figure 1 schematically shows a flow chart of a first method for a first autonomous vehicle (AV) 10 and a second method for a second AV 12. The methods are explained view reference to figure 2 which schematically shows a driving situation of the first and second AVs 10, 12. The illustrated driving situation is to be understood as merely an representative example of a plethora of potential driving situations and the present invention is not limited thereto.

As shown in figure 2, the first and second AVs 10, 12 are driving on a road 14. In this example, the road 14 has two adjacent lanes in the same direction, namely a driving lane 16 and a fast lane 18. Opposite to the fast lane 18 and adjacent to the driving lane 16, the road 14 has a hard shoulder 20, e.g. to allow emergency stops. In the depicted driving situation, the second AV 12 follows the first AV 10 at a certain distance on the driving lane 16. During autonomous operation of the first AV 10, the autonomous driving system (ADS) and the autonomous vehicle platform (AVP) of the first AV 10 are continuously monitored.

In the following, the first method is described in view of the first AV 10 and the second method is explained in view of the second AV 12. The first AV 10 comprises a first control unit configured to perform the first method and the second AV 12 comprises a second control unit configured to perform the second method. However, it may be understood that roles of the first and second AVs 10, 12 may also be interchanged. For example, the control unit of each of the first and second AVs 10, 12 may be configured to perform both the first and the second method as disclosed herein.

As shown in figure 1, according to a first step 50 of the first method, an incident of the ADS and/or of the AVP of the first AV 10 are identified based on the monitoring thereof.

According to a second step 52 of the first method, an internal fault 22 of the first AV 10 or an emergency event of a passenger of the first AV 10 is detected based on the identified incident of the ADS and/or the AVP. For example, the internal fault 22 may be an electronic fault of one of the systems of the first AV 10. Based on the detected internal fault 22, the system of the first AV 10 decides that the trip cannot or should not be continued in terms of traffic safety.

According to a third step 54 of the first method, the first AV 10 triggers a minimal risk maneuver (MRM) 24 to control the ADS to transfer the first AV 10 into a minimal risk condition (MRC) 26. As shown in figure 2, the first AV 10 detects a corresponding internal fault 22 and initiates a MRM 24 which involves a trajectory including a lane change from the driving lane 16 to the adjacent hard shoulder 20. That is, the MRC 26 may be a stop of the first AV 10 on the hard shoulder 20. However, it is apparent that there may be a plethora of other driving situations which require different MRMs 24 to bring the first AV 10 in a MRC 26. In addition, the MRCs 26 may be different, e.g. limiting the speed of the first AV 10, deactivating certain (comfort) functionalities of the first AV 10 and so on.

According to a fourth step 56 of the first method, a first Vehicle to Everything (V2X) communication signal including status information of the first AV 10 and incident information about the triggered MRM 24 is transmitted to the environment of the first AV 10, e.g. to the second AV 12, by using a V2X communication module of the first AV 10. For example the first V2X communication signal includes a cooperative awareness message (CAM) including the status information of the first AV 10, i.e. position, speed and acceleration of the first AV 10, and a second message including the incident information about the triggered MRM 24, i.e. an incident information container including an incident type indicating the internal fault 22, the target safe state, i.e. the intended stop on the hard shoulder 20 and the trajectory of the MRM 24 to bring the first AV 10 into the MRC 26.

According to an optional fifth step 58 of the first method, the first AV 10 identifies a region affected by the MRM 24. Referring to the example of figure 2, the first AV 10 determines that the driving lane 16 and the upcoming section of the hard shoulder 20 is potentially hazardous for the following traffic, i.e. the second AV 12. Accordingly, the first AV 10 generates a warning about the identified affected region.

In an optional sixth step 60 of the first method, the first AV 10 transmits a second V2X communication signal including the warning of the identified affected region by using the V2X communication module. The transmitted second V2X communication signal includes a Decentralized Environmental Notification Message (DENM). The DENM is a message about location and traffic data as well as traffic situations and hazards that is exchanged between road users. The DENM contains information about both the sending vehicle and the hazard area to warn others. The second V2X communication signal further includes a third message including the warning of the identified affected region.

As shown in figure 1, according to a first step 62 of the second method, the first V2X communication signal transmitted by the first AV 10 including the status information of the first AV 10 and incident information about the triggered MRM 24 of the first AV 10 is received by the second AV 12 by using the V2X communication module of the second AV 12.

According to a second step 64 of the second method, the second AV 12 identifies a relevance of the triggered MRM 24 of the first AV 10 with regard to the second AV 12. As the second AV 12 follows the first AV 10 on the same driving lane 16, the second AV 12 may determine that the relevance of the triggered MRM 24 is high. However, in other situations, e.g. in which the first AV 12 drives on another lane and the trajectory of the MRM 24 is not crossing the planned trajectory of the second AV 12, the second AV 12 may also decide that the triggered MRM 24 of the first AV 10 is of low or no relevance such that no action of the second AV 12 appears to be necessary to prevent a collision with the first AV 10.

According to an optional third step 66 of the second method, the second AV 12 receives, by using the V2X communication module of the second AV 12, the second V2X communication signal transmitted by the first AV 10 in the sixth step of the first method. That is, the second AV 12 receives a warning of the identified affected region, namely that the driving lane 16 the second AV 12 is currently driving on and the upcoming section of the hard shoulder 20 is subject to the MRM 24 of the first AV 10 so that a collision risk between the first and second AVs 10, 12 may be high.

According to a fourth step 68 of the second method, the ADS of the second AV 12 is controlled based on the identified relevance of the triggered MRM 24 of the first AV 10. Due to the high relevance of the MRM 24 and the identified high risk of a collision with the first AV 10 in the driving situation illustrated in figure 2, the second AV 12 will control the ADS to plan a trajectory of an avoiding maneuver 28. The avoiding maneuver 28 may include a lane change from the driving lane 16 to the fast lane 18 and a reduction of speed to prevent a rear-end collision with the first AV 10. Accordingly, due to the exchanged incident information including information on the triggered MRM 24 of the first AV 10, the awareness of the surrounding traffic, e.g. the second AV 12, can be increased such that the traffic may react appropriately to reduce the risk of collision and increase the safety risk. In particular, the surrounding traffic may decide whether a countermeasure or no action is required to prevent a collision with the first AV 10.

### Reference signs

- 10: first autonomous vehicle
- 12: second autonomous vehicle
- 14: road
- 16: driving lane
- 18: fast lane
- 20: hard shoulder
- 22: internal fault
- 24: trajectory of minimal risk maneuver
- 26: minimal risk condition
- 28: trajectory of avoiding maneuver

- 50: first step of first method - identifying an incident
- 52: second step of first method - detecting an internal fault or an emergency event of a passenger
- 54: third step of first method - triggering a MRM
- 56: fourth step of first method - transmitting a first V2X communication signal
- 58: optional fifth step of first method - identifying a region affected by the MRM
- 60: optional sixth step of first method - transmitting a second V2X communication signal

- 62: first step of second method - receiving a V2X communication signal
- 64: second step of second method - identifying a relevance of MRM
- 66: optional third step of second method - receiving a second V2X communication signal
- 68: fourth step of second method - control the ADS based on relevance of MRM

## Claims

1. A method for an autonomous vehicle, AV (10, 12), including the steps of:
- identifying (50) an incident of an autonomous driving system, ADS, and/or an autonomous vehicle platform, AVP, of the AV (10, 12) by monitoring the ADS and/or the AVP,
- detecting (52) an internal fault (22) of the AV (10, 12) and/or an emergency event of a passenger of the AV (10, 12) based on the identified incident of the ADS and/or the AVP,
- triggering (54) a minimal risk maneuver, MRM, (24) to control the ADS to transfer the AV (10, 12) into a minimal risk condition, MRC, (26) and
- transmitting (56) a first Vehicle to Everything, V2X, communication signal including status information of the AV (10, 12) and incident information about the triggered MRM (24) to the environment of the AV (10, 12) by using a V2X communication module of the AV (10, 12).

2. The method according to claim 1,
wherein the first V2X communication signal includes a cooperative awareness message, CAM, including the status information of the AV (10, 12) and a second message including the incident information about the triggered MRM (24) or
wherein the first V2X communication signal includes an extended CAM including the status information of the AV (10, 12) and the incident information about the triggered MRM (24).

3. The method according to claim 1 or 2, wherein the first V2X communication signal is transmitted via broadcast.

4. The method according to any one of the preceding claims, further comprising the step of determining surrounding vehicles affected by the triggered MRM (24) by using the ADS and/or the V2X communication module of the AV (10, 12), wherein the first V2X communication signal is transmitted to affected surrounding vehicles via unicast or multicast.

5. The method according to any one of the preceding claims, wherein the incident information about the triggered MRM (24) include at least one of an incident type, an incident identifier, the MRC (26), a MRM limitation, a criticality and/or the faulty capability.

6. The method according to any one of the preceding claims, further comprising the step of identifying a region affected by the MRM (24), wherein the first V2X communication signal further includes a warning of the identified affected region as being potentially hazardous.

7. The method according to any one of the preceding claims, further comprising the steps of:
- identifying (58) a region affected by the MRM (24) and
- transmitting (60) a second V2X communication signal including a warning of the identified affected region by using the V2X communication module of the AV (10, 12).

8. The method according to claim 7, wherein the second V2X communication signal includes a Decentralized Environmental Notification Message, DENM, and a third message including the warning of the identified affected region or
wherein the V2X communication signal includes an extended DENM including the warning of the identified affected region.

9. A control unit for an autonomous vehicle configured to perform the method according to any of the preceding claims.

10. An autonomous vehicle (10, 12) including the control unit according to the preceding claim.

11. A computer program comprising instructions which, when the program is executed by a computer, cause the computer to perform the method according to any one of the claims 1 to 8.

12. A method for an autonomous vehicle, AV (12, 10), including the steps of:
- receiving (62) a Vehicle to Everything, V2X, communication signal including status information of another AV (10, 12) and incident information about a triggered minimal risk maneuver, MRM, (24) of the other AV (10, 12) by using a V2X communication module of the AV (12, 10),
- identifying (64) a relevance of the triggered MRM (24) of the other AV (10, 12) with regard to the AV (12, 10) and
- control (68) the ADS of the AV (12, 10) based on the identified relevance of the triggered MRM (24) of the other AV (10, 12).

13. A control unit for an autonomous vehicle configured to perform the method according to the preceding claim.

14. An autonomous vehicle (12, 10) including the control unit according to the preceding claim.

15. A computer program comprising instructions which, when the program is executed by a computer, cause the computer to perform the method according to claim 12.
